# EUROPEAN PATENT APPLICATION

(11) **EP 2 510 801 A1**
(43) Date of publication of application: **17.10.2012**
(21) Application number: 12176234.8
(22) Date of filing: 14.03.2008
(51) Int. Cl.: A23F 3/16, A23F 5/24, A23L 2/02, A23L 2/385, A23L 2/40, A23L 2/60

(54) **Carbonated drink sweetened with rebaudioside A and D**

(30) Priority: 14.03.2007 US 686219
(62) Divisional of application: 08732204.6
(71) Applicant: The Concentrate Manufacturing Company of Ireland, Hamilton HM 12 (BM)
(72) Inventor: LEE, Thomas, Scarsdale, NY New York 10583 (US)
(74) Representative: Duxbury, Stephen

(57) **Abstract**

A reduced calorie beverage comprising rebaudioside A, erythritol and D-tagatose as a sweetener; independent claims are directed to tea beverages, coffee beverages, juices, reduced calorie beverages, diet beverages, and near waters, and corresponding concentrates.
The claims are directed to a carbonated soda beverage including rebaudioside A and D.

## Description

This application claims priority to U.S. provisional Application Serial No. 11/686,219, filed March 14, 2007 and entitled *Beverage Sweetened with Rebaudioside A* (Attorney Docket No. 056943.00035).

### FIELD OF THE INVENTION

This invention relates to beverages and other beverage products, such as beverage concentrates, etc. In particular, this invention relates to beverages and other beverage products having formulations incorporating non-nutritive sweeteners and being suitable to meet market demand for alternative nutritional characteristics or flavor profiles in beverages.

### BACKGROUND

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional, flavor, shelf life, and other objectives.

Development of new beverage formulations has faced obstacles. For example, U.S. patent No. 4,956,191 suggests that carbonated beverages which contain blends of saccharin or the Stevia extract with aspartame tend to be less organoleptically pleasing than those containing sugar.

It is therefore an object of the present invention to provide beverages and other beverage products. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

### BRIEF SUMMARY OF THE INVENTION

In accordance with a first aspect, a diet tea beverage is provided. The diet tea beverage has less than about 5 calories/8oz and comprises rebaudioside A (hereinafter "Reb A"), erythritol, D-tagatose, and at least one tea flavorant selected from the group consisting of tea solid, tea extract and tea flavor, and a mixture of any of them.

In accordance with a first aspect, a diet tea beverage is provided. The diet tea beverage has less than about 5 calories/8oz and comprises rebaudioside A (hereinafter "Reb A"), erythritol, D-tagatose, and at least one tea flavorant selected from the group consisting of tea solid, tea extract and tea flavor, and a mixture of any of them.

In accordance with another aspect, a reduced calorie tea beverage is provided. The reduced calorie tea beverage has less than about 10 Brix and comprises rebaudioside A (hereinafter "Reb A"), erythritol, D-tagatose, and a nutritive sweetener selected from the group consisting of sugar and glucose-fructose syrup made from corn (i.e. HFCS) and/or a fruit(s) (e.g. apple), and a mixture of any of them.

In accordance with another aspect, a reduced calorie tea beverage is provided. The reduced calorie tea beverage has less than about 10 Brix and comprises rebaudioside A (hereinafter "Reb A"), erythritol, D-tagatose, and a nutritive sweetener selected from the group consisting of sugar and glucose-fructose syrup made from corn (i.e. HFCS) and/or a fruit(s) (e.g. apple), and a mixture of any of them.

In accordance with another aspect, a diet carbonated soda drink (hereinafter "CSD") is provided. The CSD has less than about 5 calories/8oz and comprises rebaudioside A (hereinafter "Reb A"), erythritol, D-tagatose, and at least one soda flavorant.

In accordance with another aspect, a diet carbonated soda drink (hereinafter "CSD") is provided. The CSD has less than about 5 calories/8oz and comprises rebaudioside A (hereinafter "Reb A"), erythritol, D-tagatose, and at least one soda flavorant.

In accordance with another aspect, a reduced calorie carbonated soda drink is provided. The reduced calorie CSD has less than about 12 Brix and comprises rebaudioside A (hereinafter "Reb A"), Erythritol, D-tagatose, and a nutritive sweetener selected from the group consisting of sugar and glucose-fructose syrup made from corn (i.e. HFCS) and/or a fruit(s) (e.g. apple), and a mixture of any of them.

In accordance with another aspect, a reduced calorie carbonated soda drink is provided. The reduced calorie CSD has less than about 12 Brix and comprises rebaudioside A (hereinafter "Reb A"), erythritol, D-tagatose, and a nutritive sweetener selected from the group consisting of sugar and glucose-fructose syrup made from corn (i.e. HFCS) and/or a fruit(s) (e.g. apple), and a mixture of any of them.

In accordance with another aspect, a near water drink is provided. The near water has less than about 5 calories/8oz and comprises rebaudioside A (hereinafter "Reb A"), Erythritol, D-tagatose, and at least one flavorant.

In accordance with another aspect, a near water drink is provided. The near water has less than about 5 calories/8oz and comprises rebaudioside A (hereinafter "Reb A"), erythritol, D-tagatose, and at least one flavorant.

In accordance with another aspect, a near water drink is provided. The near water has less than about 1 Brix and comprises rebaudioside A (hereinafter "Reb A"), erythritol, D-tagatose, and a nutritive sweetener selected from the group consisting of sugar, glucose-fructose syrup made from corn (i.e. HFCS) and/or a fruit(s) (e.g. apple), and fructose, and a mixture of any of them.

In accordance with another aspect, a near water drink is provided. The near water has less than about 1 Brix and comprises rebaudioside A (hereinafter "Reb A"), erythritol, D-tagatose, and a nutritive sweetener selected from the group consisting of sugar, glucose-fructose syrup made from corn (i.e. HFCS) and/or a fruit(s) (e.g. apple), and fructose, and a mixture of any of them.

In accordance with another aspect, a juice drink is provided. The juice drink has less than about 7 Brix and comprises about 10% juice, rebaudioside A (hereinafter "Reb A"), and a nutritive sweetener selected from the group consisting of sugar, glucose-fructose syrup made from corn (i.e. HFCS) and/or a fruit(s) (e.g. apple), erythritol, and D-tagatose, and a mixture of any of them.

In accordance with another aspect, a ready-to-drink coffee is provided. The ready-to-drink coffee has less than about 8.4% solid or less than about 110 cal/8 oz, and comprises a coffee, rebaudioside A (hereinafter "Reb A"), and a nutritive sweetener selected from the group consisting of sugar, glucose-fructose syrup made from corn (i.e. HFCS) and/or a fruit(s) (e.g. apple), erythritol and D-tagatose, and a mixture of any of them.

In accordance with another aspect, a ready-to-drink coffee is provided. The ready-to-drink coffee has less than about 7.4% solid or less than about 70 cal/8 oz, and comprises a coffee, rebaudioside A (hereinafter "Reb A"), erythritol, D-tagatose, and a nutritive sweetener selected from the group consisting of sugar and glucose-fructose syrup made from corn (i.e. HFCS) and/or a fruit(s) (e.g. apple), and a mixture of any of them.

In accordance with another aspect, a ready-to-drink coffee is provided. The ready-to-drink coffee has less than about 7.4% solid or less than about 70 cal/8 oz, and comprises a coffee, rebaudioside A (hereinafter "Reb A"), erythritol, D-tagatose, and a nutritive sweetener selected from the group consisting of sugar and glucose-fructose syrup made from corn (i.e. HFCS) and/or a fruit(s) (e.g. apple), and a mixture of any of them.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF THE INVENTION

Those of ordinary skill in the art will understand that, for convenience, some ingredients are described here in certain cases by reference to the original form of the ingredient in which it is added to the beverage product formulation. Such original form may differ from the form in which the ingredient is found in the finished beverage product. Thus, for example, in certain exemplary embodiments of the natural cola beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage concentrate, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, and flavoring, and typically also acidulant, coloring and/or carbonation. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweetener, kola nut extract and/or other flavoring, caramel coloring, phosphoric acid, and optionally other ingredients. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid concentrates, flavored waters, enhanced waters, fruit juice and fruit juice-flavored drinks, sport drinks, and alcoholic products. The terms "beverage concentrate" and "syrup" are used interchangeably throughout this disclosure. At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In, at least certain exemplary embodiments the water used in beverages and concentrates disclosed here is "treated water," which refers to water that has been treated to reduce the total dissolved solids of the water prior to optional supplementation, e.g., with calcium as disclosed in u.s. patent no. 7,052,725. Methods of producing treated water are known to those of ordinary skill in the art and include deionization, distillation, filtration and reverse osmosis ("r-o"), among others. The term "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

In the beverages disclosed herein, rebaudioside A is used as a sweetener, either alone or in conjunction with other sweeteners. Other sweeteners can be used in combination with rebaudioside A for use in certain exemplary embodiments of the beverages disclosed herein, including natural and artificial or synthetic sweeteners. Suitable sweeteners and combinations of sweeteners are selected for the desired nutritional characteristics, taste profile for the beverage, mouthfeel and other organoleptic factors. Non-nutritive sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame (including but not limited to acesulfame potassium), cyclamate (including but not limited to sodium cyclamate and/or calcium cyclamate), neohesperidin dihydrochalcone, and sucralose. Alitame may be less desirable for caramel-containing beverages where it has been known to form a precipitate. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo ("LHG"), steviol glycosides, e.g., steviosides and rebaudiosides other than rebaudioside A, and other dipeptides (e.g. neotame), saccharin, xylose, arabinose, isomalt, lactitol, maltitol, trehalose, and ribose, and protein sweeteners such as thaumatin, monellin, monatin, brazzein, L-alanine and glycine, related compounds and mixtures of any of them. Lo Han Guo, steviol glycosides, e.g., steviosides, rebaudiosides and related compounds, as discussed further below, are natural non-nutritive potent sweeteners. It will be within the ability of those skilled in the art, given the benefit of this disclosure, to select suitable non-nutritive sweetener (e.g., one or combination of non-nutritive sweeteners, either alone or together with nutritive sweetener) for a particular embodiment of the beverage products disclosed here.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 8 oz. serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, and/or others. Such sweeteners are present in at least certain exemplary embodiments in an amount of from about 0.1% to about 20% by weight of the beverage, such as from about 6% to about 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

The sweeteners are edible consumables suitable for consumption and for use in beverages. By "edible consumables" is meant a food or beverage or an ingredient of a food or beverage for human or animal consumption. The sweetener or sweetening agent used here and in the claims can be a nutritive or non-nutritive, natural or artificial beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ rebaudioside A, and can include stevioside, other steviol glycosides in addition to rebaudioside A, or related compounds or mixtures of any of them for sweetening. These compounds, including rebaudioside A, can be obtained by extraction or the like from the stevia plant. Stevia (e.g., Stevia rebaudiana Bertoni) is a sweet-tasting plant. The leaves contain a complex mixture of natural sweet diterpene glycosides. Steviol glycosides, e.g., steviosides and rebaudiosides, are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG sweeteners. Lo Han Guo can be used as the juice or juice concentrate, powder, etc. Preferably LHG juice contains at least about 0.1%, e.g., from 0.1% to about 15%, mogrosides, preferably mogroside V, mogroside IV, 11-oxo-mogroside V, siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverages disclosed here.

Acid used in beverages disclosed here can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, eg., from about 0.05% to about 0.5% by weight of the beverage, such as 0.1% to 0.25% by weight of the beverage, depending upon the acidulant used, desired ph, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a plant. Included are both those wherein a sweet pulp is associated with a seed of a fruit, e.g., banana, tomato, cranberry and the like, and those having small, fleshy berry. The term berry also is used here to include aggregate fruits, i.e., not "true" berries, but commonly accepted as such. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, tangerine, mandarin orange, tangelo, and pomelo, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, mandarin and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleresin, juice concentrate, bottler's base, or other forms known in the art. In at least certain exemplary embodiments, such spice or other flavors compliment that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure. Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth, in the beverage products. For example, U.S. Patent No. 4,830,862 to Braun et al. Discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

Degrees Brix (symbol °Bx) is a measurement of the mass ratio of dissolved sucrose to water in a liquid. It is measured with a saccharimeter that measures specific gravity of a liquid or more easily with a refractometer. A 25 °Bx solution has 25 grams of sucrose sugar per 100 grams of liquid. Or, to put it another way, there are 25 grams of sucrose sugar and 75 grams of water in the 100 grams of solution.

### EXAMPLES

The following examples are specific embodiments of the present invention but are not intended to limit it. All percentages are by weight unless otherwise stated.

### EXAMPLE 1

Various beverages can be prepared according to the following Table 1:

**Table I - Stevia, Reb A**

| Product Type | Calories or Brix range | Sweeteners | Other typical Ingredients |
|---|---|---|---|
| Diet Tea | <5 cal/8oz (diet) | Reb A with or without Erythritol and/or Tagatose | Tea solid, tea extract, tea flavors, acids, 300 ppm total flavonoids antioxidant typical, optionally pectin and preservatives |
| CSD (e.g. Diet Cola, Diet Mountain Dew™, Diet Sierra Mist™) | <5 cal/8oz (diet) | Reb A with or without Erythritol and/or Tagatose | Color, acidulant, flavors (can be caramel emulsion, gum Arabic emulsion, and/or flavor extract such as minor amounts of juice), antifoam, CO₂, optionally caffeine, buffering salts, citrus pectin, and preservatives including minor amounts of ascorbic acid. |
| Near Waters (e.g., Aquafina™ Splash) | <5 cal/8oz (diet) | Reb A with or without Erythritol and/or Tagatose | Acidulant, flavor, optionally CO₂ and preservatives |
| Calorie reduced tea | <10 Brix, could be used for 1-9 Brix reduction | Reb A with sugar and/or glucose-fructose syrup made from corn (i.e. HFCS) and/or a fruit(s) | Tea solid, tea extract, tea flavors, acids, 300 ppm total flavonoids antioxidant typical, optionally pectin and preservatives |
| Calorie reduced CSD | < 12 Brix, could be used for 1-10 Brix reduction | Reb A with sugar and/or glucose-fructose syrup made from corn (i.e. HFCS) and/or a fruit(s) | Color, acidulants, preservative(s), flavors (can be caramel emulsion, gum Arabic emulsion, and/or flavor extract such as minor amounts of juice), antifoam, CO₂, optionally caffeine, buffering salts, citrus pectin, and preservatives including minor amounts of ascorbic acid. |
| Fitness water | < 1 Brix sugar | Reb A with at least one of sugar, glucose-fructose syrup made from corn (i.e. HFCS) and/or a fruit(s), or fructose | Citric acid, malic acid, flavor, minerals (calcium and magnesium), vitamins (C, E, B3, B5, B6, B12), buffering salts, optionally preservatives |
| Juice drinks | 10% juice, < 7 Brix (or <70 cal/8oz) | Reb A with or without sugar, glucose-fructose syrup made from corn (i.e. HFCS) and/or a fruit(s), Erythritol, or Tagatose | Single strength or reduced juices (single or mixed), acids, Vit. C, color, pectin, buffering system, flavor clouding agent optionally preservatives. |
| Ready to drink coffees | (a) Frappachino(chang e name): < 8.4% solid or < 110 cal/8 oz (b) Double Shot(change name): < 7.4% solid or < 70 cal/8 oz | Reb A, sugar, or glucose-fructose syrup made from corn (i.e. HFCS) and/or a fruit(s) | Cream, condensed milk, coffee solids or aqueous coffee extract, and optionally pectin, maltodextrin, caramel color, buffering salts, cocoa and preservatives including minor amounts of ascorbic acid. |

| | | | |
|---|---|---|---|
| Notes: • Acidulants are predominantly citric acid except for colas which are predominantly phosphoric. • Buffering salts are likely to be sodium or potassium citrate; for coffee, tripotassium phosphate is likely • Buffering system is a combination of acidulants and buffering salts • Reb A in diet products is estimated to be typically at 400-600 ppm if there are no other sweeteners; if other sweeteners are present the amount of Reb A is reduced but the overall sweetness level is equivalent to a 10 Brix solution except for CSDs where the sweetness is equivalent to about 12 Brix, and fitness water where the sweetness is equivalent to about 5 to 7 • Antifoam typically is a silica particle, surrounded by silicone oil, with an "emulsion coating." • Typically preservatives can be sorbate, benzoate, EDTA, SHMP and mixtures thereof. • Flavor clouding agents include gum arabic, ester gum, modified food starch, xanthan gum and combinations thereof. • Typically erythritol range is about 1.75 - 3.5%, tagatose range is about 0.25 - 0.75%. • Juices are typical fruit juices: orange, white grape juice, apple juice, pear juice, and lesser amounts of "key juices" such as pineapple. Other types of fruit juices may be used. | | | |

Each of the above beverages can be formed by mixing a corresponding concentrate with water in a suitable amount and manner.

Each of the above beverages is found to have good taste and mouthfeel.
Notwithstanding the claims, the invention is also referred to in the following clauses:
1. A tea beverage comprising rebaudioside A, erythritol, D-tagatose, and at least one tea flavorant selected from the group consisting of tea solid, tea extract and tea flavor, and a mixture of any of them.
2. The tea beverage of Clause 1, wherein the tea beverage is a diet tea beverage having less than about 5 calories/8oz.
3. The tea beverage of Clause 1 comprising an acid selected from the group consisting of phosphoric acid, citric acid, malic acid, tartaric acid, lactic acid, formic acid, ascorbic acid, fumaric acid, gluconic acid, succinic acid, maleic acid, adipic acid, and mixtures of any of them.
4. The tea beverage of Clause 1 comprising about 300 ppm total antioxidant flavonoids.
5. The tea beverage of Clause 1, wherein the tea beverage is a reduced calorie tea beverage having less than about 10 Brix, and further comprising a nutritive sweetener selected from the group consisting of sugar and glucose-fructose syrup made from corn and/or a fruit(s), and a mixture of any of them.
6. A carbonated soda drink beverage comprising rebaudioside A, erythritol, D-tagatose, carbonated water, and at least one soda flavorant.
7. The carbonated soda drink beverage of Clause 6, wherein the soda beverage is a diet soda having less than about 5 calories/8oz.
8. The carbonated soda drink beverage of Clause 6 comprising at least one acidulant selected from the group consisting of phosphoric acid, citric acid, malic acid, tartaric acid, lactic acid, formic acid, ascorbic acid, fumaric acid, gluconic acid, succinic acid, maleic acid, adipic acid, and mixtures of any of them.
9. The carbonated soda drink beverage of Clause 6 wherein the soda flavorant is selected from the group consisting of caramel emulsion, gum Arabic emulsion, and flavor extract comprising at least one juice, and a mixture of any of them.
10. The carbonated soda drink beverage of Clause 6 wherein the soda beverage is a reduced calorie soda having less than about 12 Brix and further comprising a nutritive sweetener selected from the group consisting of sugar and glucose-fructose syrup made from corn and/or a fruit(s), and a mixture of any of them.
11. A near water beverage having less than about 5 calories/8oz and comprising water, rebaudioside A, erythritol, and D-tagatose.
12. The near water beverage of Clause 11 comprising an acidulant selected from the group consisting of phosphoric acid, citric acid, malic acid, tartaric acid, lactic acid, formic acid, ascorbic acid, fumaric acid, gluconic acid, succinic acid, maleic acid, adipic acid, and mixtures of any of them.
13. The near water beverage of Clause 11 comprising at least one flavorant.
14. The near water beverage of Clause 11 comprising carbonated water.
15. A juice beverage having less than about 7 Brix and comprising about 10% juice by weight, rebaudioside A, erythritol, and D-tagatose.
16. The juice beverage of Clause 15 further comprising a sweetener selected from the group consisting of a sugar and glucose-fructose syrup made from corn and/or a fruit(s), and mixtures thereof.
17. The juice beverage of Clause 15 wherein the juice comprises a single strength juice or a reduced juice.
18. The juice beverage of Clause 17 wherein the reduced juice comprises a single juice or a combination of mixed juices.
19. The juice beverage of Clause 15 comprising at least one acid selected from the group consisting of phosphoric acid, citric acid, malic acid, tartaric acid, lactic acid, formic acid, ascorbic acid, fumaric acid, gluconic acid, succinic acid, maleic acid, adipic acid, and mixtures of any of them.
20. The juice beverage of Clause 15 comprising a buffering system, the buffering system comprising a combination of at least one acidulant and at least one buffering salt.
21. A ready-to-drink coffee beverage comprising rebaudioside A, erythritol, tagatose, and a coffee flavorant selected from the group consisting of coffee solids and aqueous coffee extract, and a mixture of any of them.
22. The ready-to-drink coffee beverage of Clause 21 further comprising a sweetener selected from the group consisting of sugar and glucose-fructose syrup made from corn and/or a fruit(s), and a mixture of any of them.
23. The ready-to-drink coffee beverage of Clause 21 having less than about 8.4% solid or less than about 100 calories/8 oz.
24. The ready-to-drink coffee beverage of Clause 21 comprising condensed milk or cream.
25. The ready-to-drink coffee beverage of Clause 21 comprising cocoa.
26. The ready-to-drink coffee beverage of Clause 21 comprising ascorbic acid as a preservative.
27. The ready-to-drink coffee beverage of Clause 21 having less than about 7.4% solid or less than about 70 calories/8 oz.
28. A concentrate that when mixed with water results in the tea beverage of Clause 1.
29. A concentrate that when mixed with water results in the carbonated soda drink beverage of Clause 6.
30. A concentrate that when mixed with water results in the ready-to-drink coffee beverage of Clause 21.

Given the benefit of the above disclosure and description of exemplary embodiments, it will be apparent to those skilled in the art that numerous alternative and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A carbonated soda drink beverage comprising rebaudioside A for sweetening and rebaudioside D for sweetening.

2. The carbonated soda drink beverage of claim 1 further comprising carbonated water.

3. The carbonated soda drink beverage of claim for 2 further comprising at least one soda flavorant.

4. The carbonated soda drink beverage of claim 3 wherein the soda flavorant is selected from the group consisting of caramel emulsion, gum Arabic emulsion, and flavor extract comprising at least one juice, and a mixture of any of them.

5. The carbonated soda drink beverage of any of the preceding claims wherein the carbonated soda drink beverage has less than about 5 calories/8oz.

6. The carbonated soda drink beverage of any of the preceding claims further comprising at least one acidulant selected from the group consisting of phosphoric acid, citric acid, malic acid, tartaric acid, lactic acid, formic acid, ascorbic acid, fumaric acid, gluconic acid, succinic acid, maleic acid, adipic acid, and combinations of any of them.

7. The carbonate soda drink beverage of any of the preceding claims wherein the carbonated soda drink beverage has less than about 12 Brix.

8. The carbonated soda drink beverage of any of the preceding claims further comprising a sweetener selected from the group consisting of sugar and glucose-fructose syrup made from corn and/or a fruit(s), and combinations of any of them.

9. The carbonated soda drink beverage of any of the preceding claims further comprising a flavoring, preferably wherein the flavoring is selected from cassia, clove, cinnamon, pepper, ginger, vanilla spice flavorings, cardamom, coriander, root bear, sassafras, ginseng or combinations of any of them.

10. The carbonated soda drink beverage of any of the preceding claims further comprising a fruit flavor, preferably wherein the fruit flavor is selected from a natural fruit flavor, a synthetic fruit flavor, a botanical flavor or combinations of any of them, more preferably wherein the fruit flavor is selected from berry, banana, tomato, cranberry, orange, lemon, lime, grapefruit, tangerine, mandarin orange, tangelo, pomelo, apple, grape, cherry, pineapple, flavor derived from an essential oil, an extract of nut, an extract of bark, an extract of root, an extract from leaves, cola flavor, tea flavor or combinations of any of them.

11. The carbonated soda drink beverage of any of the preceding claims further comprising a buffering system, the buffering system comprising a combination of at least one acidulant and at least one buffering salt.

12. The carbonated soda drink beverage of any of the preceding claims further comprising caffeine, wherein the carbonated soda drink beverage has less than about 0.02 wt. % caffeine.

13. A concentrate that when mixed with water results in the carbonated soda drink beverage of claim 1.

14. A sweetener comprising rebaudioside A and rebaudioside D for sweetening a carbonated soda drink.

15. Use of rebaudioside A and rebaudioside D for sweetening a carbonated soda drink.
